## Europäisches Patentamt

## European Patent Office

## Office européen des brevets

(19)

(11) Veröffentlichungsnummer: **0 047 524**
**B1**

(12) # EUROPÄISCHE PATENTSCHRIFT

(45) Veröffentlichungstag der Patentschrift:
**12.12.84**

(51) Int. Cl.³: **H 04 Q 7/04,** H 04 M 17/02,
H 04 B 7/26

(21) Anmeldenummer: **81107043.2**

(22) Anmeldetag: **07.09.81**

(54) **Kommunikationssystem, insbesondere Fernsprechsystem zum Anschluss von mobilen Teilnehmerendgeräten.**

(30) Priorität: **10.09.80 DE 3034066**

(43) Veröffentlichungstag der Anmeldung:
**17.03.82 Patentblatt 82/11**

(45) Bekanntmachung des Hinweises auf die Patenterteilung:
**12.12.84 Patentblatt 84/50**

(84) Benannte Vertragsstaaten:
**AT BE CH DE FR GB IT LI LU NL SE**

(56) Entgegenhaltungen:
**DE - A - 1 938 056**
**DE - A - 2 709 855**
**DE - A - 2 903 450**
**DE - B - 2 040 028**
**DE - B - 2 309 646**
**DE - B - 2 441 343**
**FR - A - 2 286 565**

(73) Patentinhaber: **Siemens Aktiengesellschaft, Berlin und München Wittelsbacherplatz 2, D-8000 München 2 (DE)**

(72) Erfinder: **Künzel, Roland, Dipl.-Ing., Irisweg 4, D-8039 Puchheim (DE)**

BUNDESDRUCKEREI BERLIN

**Beschreibung**

Die vorliegende Erfindung betrifft ein Kommunikationssystem, insbesondere Fernsprechsystem, zum Anschluß von mobilen Teilnehmerendgeräten, insbesondere über Funkverbindungen angeschlossenen mobilen Teilnehmerendgeräten, bei dem an zentraler und/oder teilzentraler Stelle Speichereinrichtungen vorgesehen sind, die für alle Benutzer jeweils eine Information über den jeweiligen Standort eines Benutzers gespeichert haben und bei denen die jeweils betreffende gespeicherte Standortinformation dazu verwendet wird, eine zu dem betreffenden mobilen Benutzer hin aufzubauende Verbindung vermittlungsmäßig zu steuern, bei dem eine mobile Endvermittlungseinrichtung oder ein mobiler Konzentrator zum Aufbauen und Abbauen von Verbindungen, zum Speichern und Vorverarbeiten von vermittlungstechnischen Daten und zum zusammengefaßten Ausführen von Organisationsfunktionen, wie beispielsweise Ummeldefunktionen, für eine Vielzahl von im wesentlichen gleichberechtigten, in einem aus zumindest einer Einheit bestehenden Verkehrsmittel, beispielsweise einem schienengeführten Massenverkehrsmittel, installierten Teilnehmerendgeräten vorgesehen ist, wobei optische Anzeigemittel, denen akustische Signalgeber beigeordnet sind, jeweils bei einem Teilnehmerendgerät und/oder an dem Aufenthaltsort des Benutzers vorgesehen sind.

In Verkehrsmitteln, beispielsweise Massenverkehrsmitteln, wie Bahnen, Schiffe, Überlandbusse, Flugzeuge und dergleichen, werden Teilnehmerendgeräte, beispielsweise Fernsprechstationen, sowohl zu betrieblichen Zwecken als auch für die zu befördernden Personen benötigt. Getrennte Systeme für Benutzereinrichtungen für das Betriebspersonal auf der einen Seite und die zu befördernden Personen auf der anderen Seite bedeuten einen vervielfachten Aufwand im Hinblick auf die Beschaffung, den Platzbedarf, die Verwaltung und Wartung dieser Einrichtungen und dergleichen. Die Auslastungen solcher Systeme sind darüber hinaus in aller Regel nicht optimal zu gestalten. Eine beträchtliche Steigerung der Nutzungsmöglichkeiten und des Komforts für die Benutzer würde zum einen die technischen und betrieblichen Nachteile getrennter Systeme vermeiden und darüber hinaus einen hohen Komfort für die privaten Benutzer bieten. Ein solcher Komfort könnte z. B. darin bestehen, daß automatische Verbindungsaufbauvorgänge von einem Fahrgast zu einem entfernten Teilnehmer oder umgekehrt durchgeführt werden können und daß beispielsweise ein bargeldloser Gebühreneinzug realisiert werden könnte.

Aus der DE-B2-2 309 646 sind ein Verfahren und eine Vorrichtung zum selbsttätigen Umschalten des Gruppenfreisignals im Zugfunkgerät des Zugpostfunkes bekannt, welche ein System voraussetzen, das der eingangs genannten Art entspricht.

Aus der DE-A1-2 709 855 ist ein Fernsprech-

und Datennetz für mobile Teilnehmer bekannt, das ebenfalls ein System der eingangs genannten Art voraussetzt.

Aus der DE-A1-2 903 450 ist ein Verfahren für den Betrieb eines Münzfernsprechapparates bekannt, bei dem eine Ausweislesevorrichtung in dem Münzfernsprechapparat vorgesehen ist.

Der vorliegenden Erfindung liegt die Aufgabe zugrunde, ein Kommunikationssystem zu schaffen, über das sowohl das Betriebspersonal eines Massenverkehrsmittels als auch die zu befördernden Personen ankommende und abgehende Kommunikations-Verbindungen, insbesondere Fernsprechverbindungen benutzen können, wobei die Benutzer des Kommunikationssystems von einer oder mehreren beliebigen aus der Vielzahl von Teilnehmerendgeräten, die in einem Massenverkehrtsmittel installiert sein können, aus Kommunikationsverbindungen aufbauen oder in ankommende Kommunikationsverbindungen, die für sie bestimmt sind, eintreten können.

Zur Lösung dieser Aufgaben wird ein Kommunikationssystem, insbesondere Fernsprechsystem, zum Anschluß von mobilen Teilnehmerendgeräten, insbesondere über Funkverbindungen angeschlossenen mobilen Teilnehmerendgeräten, der eingangs genannten Art bzw. gemäß dem Oberbegriff des Patentanspruchs 1 vorgeschlagen, das durch die im kennzeichnenden Teil dieses Patentanspruchs angegebenen Merkmale gekennzeichnet ist.

Die vorliegende Erfindung bietet den Vorteil, daß ein einheitliches System zur Benutzung durch das Betriebspersonal und durch die zu befördernden Personen zur Verfügung steht, wobei ein besonderer Benutzungskomfort dadurch gegeben ist, daß die Benutzer ein beliebiges aus der Vielzahl von in einem Massenverkehrsmittel installierten Teilnehmerendgeräten abgehend und ankommend benutzen können und daß ein bargeldloser Gebühreneinzug mit Hilfe automatischer Abbuchungsvorgänge von Hand von auf dem Benutzerausweis gespeicherten Daten ermöglicht ist.

Vorteilhafte Weiterbildungen der Erfindung sind durch die in den Unteransprüchen angegebenen Merkmale gekennzeichnet bzw. gehen aus der im folgenden an Hand der Figuren gegebenen Beschreibung hervor.

Im folgenden wird die Erfindung an Hand mehrerer Ausführungsbeispiele für die Erfindung betreffender Figuren im einzelnen erläutert.

Fig. 1 zeigt eine schematische perspektivische Ansicht eines Verkehrsmittels V, nämlich eines Eisenbahnzuges, und einer landfesten, zentralen oder teilzentralen Funkverbindungsstelle mit einer ebenfalls schematisch gezeigten Speichereinrichtung SI.

Fig. 2 zeigt schematisch eine geöffnete Draufsicht einer Einheit des Verkehrsmittels V, nämlich eines Eisenbahnwaggons, mit angegebenen Einbaustellen verschiedener mobiler Bestandteile des Kommunikationssystems.

Fig. 3 zeigt schematisch in perspektivischer Darstellung ein Teilnehmerendgerät T mit ebenfalls schematisch dargestellter Ausweislesevorrichtung L, mit einer Endgerät-Speichereinheit TSP und einem in die Ausweislesevorrichtung L einzuschiebenden Benutzerausweis A.

Fig. 4 zeigt das Blockschaltbild eines Ausführungsbeispiels für den erfindungswesentlichen Teil des Kommunikationssystems mit einem zentralen Datenbus B, einer mobilen Endvermittlungseinrichtung EM bzw. einen mobilen Konzentrator KM, mehreren Teilnehmerendgeräten T, mehreren optischen Anzeigemitteln AO mit jeweils beigeordneten akustischen Signalgebern S und einer über eine Funkverbindung angeschlossenen zentralen oder teilzentralen, landfesten Speichereinrichtung SI.

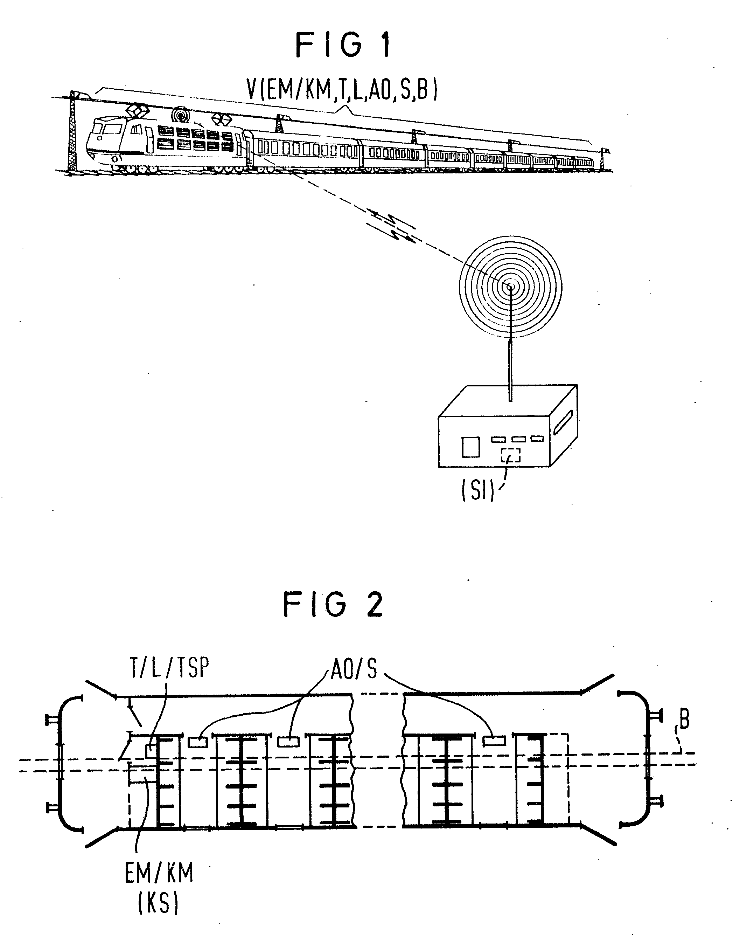

Wie bereits erläutert, zeigt Fig. 1 eine schematische perspektivische Ansicht eines Verkehrsmittels V, nämlich eines Eisenbahnzuges, und einer landfesten, zentralen oder teilzentralen Funkverbindungsstelle mit einer ebenfalls schematisch gezeigten Speichereinrichtung SI. Fig. 2 zeigt schematisch, wie ebenfalls bereits erläutert, eine geöffnete Draufsicht einer Einheit des Verkehrsmittels V, nämlich eines Eisenbahnwaggons, mit angegebenen Einbaustellen verschiedener mobiler Bestandteile des Kommunikationssystems. Diese mobilen Bestandteile sind eine mobile Endvermittlungseinrichtung EM bzw. ein mobiler Konzentrator KM, ein Teilnehmergerät T mit einer eingebauten Ausweisesevorrichtung L und einer eingebauten Endgerät-Speichereinheit TSP sowie mehrere in den Waggonabteils vorzugsweise über der Gangtür installierten optischen Anzeigemittel AO, denen jeweils vorzugsweise ein akustischer Signalgeber S zugeordnet ist. Wie aus Fig. 2 zu erkennen, ist ein zentraler Datenbus B vorgesehen, der sich in Längsrichtung des Waggons erstreckt und über die Enden des Waggons hinaus fortsetzbar angeordnet ist, so daß entsprechende mobile Einrichtungen in weiteren Waggons des Zuges in der gezeigten Weise anschließbar sind. Die mobile Endvermittlungseinrichtung EM bzw. der mobile Konzentrator KM ist jedoch in aller Regel nur einmal je Verkehrsmittel V vorhanden und kann an geeigneter Stelle, vorzugsweise auch in der Lokomotive, untergebracht sein. Wie zu erkennen ist, sind mehr optische Anzeigemittel AO mit ihren akustischen Signalgebern S als Teilnehmerendgerät T vorgesehen. In aller Regel dürfte der Einbau eines einzigen Teilnehmerendgerätes in einem Eisenbahnwaggon herkömmlicher Bauart und Größe ausreichend sein. Dieses Teilnehmerendgerät T ist zweckmäßig beispielsweise im Bereich des Ganges oder im Bereich der Waggontüren installiert. Die optischen Anzeigemittel AO mit den beigeordneten akustischen Signalgebern S sind aus Gründen des Komforts vorzugsweise in den Abteils angeordnet. Sie haben die Aufgabe, die Fahrgäste aufmerksam zu machen und ihnen anzuzeigen, daß ein Kommunikationswunsch besteht und für welchen der Fahrgäste der betreffende Anruf bestimmt ist.

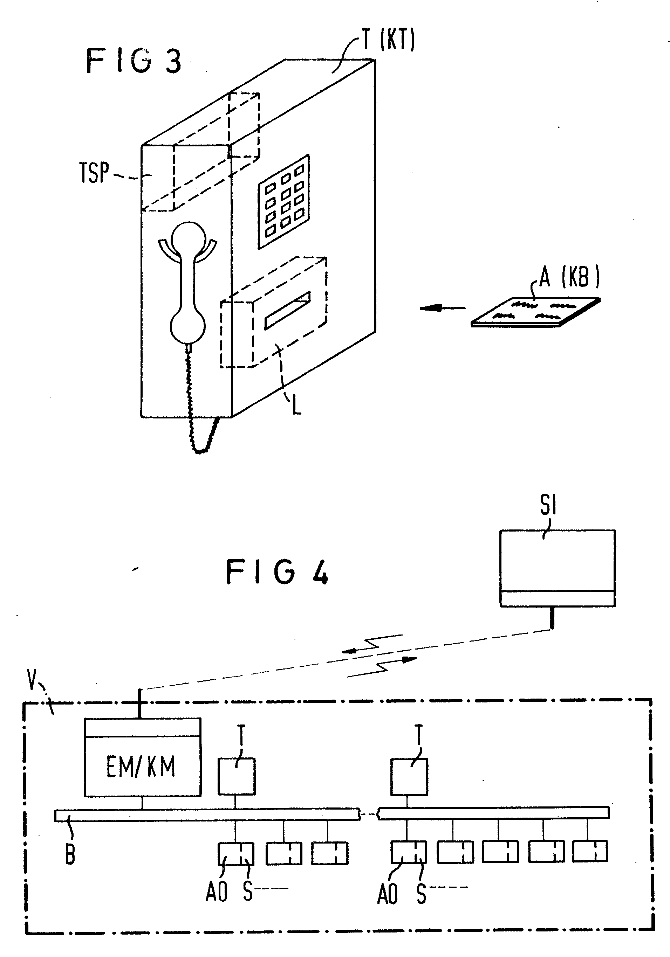

Die mobile Endvermittlungseinrichtung EM bzw. der mobile Konzentrator KM dient zum Aufbauen und Abbauen von Verbindungen, zum Speichern und Vorverarbeiten von vermittlungstechnischen Daten und zum zusammengefaßten Ausführen von Organisationsfunktionen, wie beispielsweise Ummeldefunktionen, für eine Vielzahl von im wesentlichen gleichberechtigten, in einem aus zumindest einer Einheit bestehenden Verkehrsmittel V installierten Teilnehmerendgeräten. Dieses Verkehrsmittel V kann selbstverständlich anstatt eines wie für das Ausführungsbeispiel gezeigten Eisenbahnzuges auch beispielsweise ein Schiff, ein Flugzeug, ein Überlandbus o. ä. sein. Jedes der installierten Teilnehmerendgeräte T weist erfindungsgemäß eine Ausweislesevorrichtung L auf, vergl. Fig. 3, in die durch einen Schlitz in der Gehäusewand des Teilnehmerendgerätes ein Benutzerausweis A gesteckt werden kann. Dieser Benutzerausweis A trägt zumindest eine eine Benutzerrufkennung KB betreffende Information, die durch die Ausweislesevorrichtung L lesbar ist. Der Benutzerausweis A kann ein magnetischer Datenträger sein, er kann jedoch ebenfalls als holographischer Datenträger ausgebildet sein. Darüber hinaus ist es, wie an sich bekannt, ebenfalls möglich, den Benutzerausweis A als einen Datenträger auszubilden, der eine strukturierte Oberfläche hat, wobei die Information in der Struktur der Oberfläche liegt. Das Teilnehmerendgerät T, in dessen Ausweislesevorrichtung L ein Benutzerausweis A gesteckt wird, nimmt automatisch die dem jeweiligen Benutzerausweis A zugeteilte Benutzerkennung KB an. Es kann jedoch erfindungsgemäß eine Vielzahl von Benutzerausweisen A in das Teilnehmerendgerät T eingelesen werden. Das Teilnehmerendgerät T weist außerdem eine eigene individuelle Teilnehmerendgerät-Rufkennung KT auf, die diesem Teilnehmerendgerät T fest zugeordnet sein kann. Die eingelesene Benutzerrufkennung KB wird zu einer dem betreffenden Teilnehmerendgerät T individuell zugeordneten Endgerät-Speichereinheit TSP übertragen und dort gespeichert. Diese Endgerät-Speichereinheit TSP ist vorzugsweise, wie auch in dem Ausführungsbeispiel gemäß Fig. 3 gezeigt, in das Teilnehmerendgerät T eingebaut. Die eingelesene Benutzerrufkennung KB wird vorzugsweise zusammen mit einer dem Standort der benutzten Ausweislesevorrichtung L zugeordneten Standortkennung KS einer zentralen oder teilzentralen, landfesten Speichereinrichtung SI, die über eine Funkverbindung mit dem Verkehrsmittel V kommuniziert, übertragen und dort gespeichert. Gleichzeitig werden diese beiden Kennungen auch zu der dem betreffenden Verkehrsmittel V zugeordneten mobilen Endvermittlungseinrichtung EM bzw. zu dem mobilen Konzentrator KM übertragen und dort ebenfalls gespeichert. Es ist jedoch auch eine Betriebsweise möglich, bei der diese beiden Kennungen ausschließlich der mobilen Endvermittlungseinrichtung EM oder dem mobilen Konzentrator KM übermittelt werden. Die Standortkennung KS kann wahlweise auch durch Identifikation der betreffenden Nachrichtenquelle ermittelt und zusammen mit der Benutzerrufkennung KB in der zentralen oder teilzentralen, landfesten Speichereinrichtung SI und/oder der dem Verkehrsmittel V zugeordneten mobilen Endvermittlungseinrichtung EM bzw. dem mobilen Konzentrator KM gespeichert werden.

Eine einmal eingeschriebene Standortkennung KS kann in den betreffenden Speicherplätzen durch eine neue Standortkennung KS' dadurch automatisch überschrieben werden, daß der Informationsinhalt des Benutzerausweises A in eine andere Ausweislesevorrichtung L eingelesen wird. Dabei wird von der zentralen oder teilzentralen, landfesten Speichereinrichtung SI und/oder der dem Verkehrsmittel V zugeordneten mobilen Endvermittlungseinrichtung EM bzw. dem mobilen Konzentrator KM ein Löschbefehl entweder an die mobile Endvermittlungseinrichtung EM bzw. den mobilen Konzentrator KM oder an die betreffende Endgerät-Speichereinheit TSP gesendet, womit die Standortkennung KS zusammen mit der Benutzerrufkennung KB bzw. nur die Benutzerrufkennung KB gelöscht wird. Eine durch die Speicherung der Benutzerrufkennung KB in dem dem Teilnehmerendgerät T zugeordneten Speicherplatz in der Speichereinrichtung SI, gegebenenfalls auch in dem Teilnehmerendgerät T selbst, vorgenommene Zuordnung der Benutzerrufkennung KB zu dem betreffenden Teilnehmerendgerät T wird dadurch aufgehoben, daß der betreffende Speicherinhalt durch einen Bedienvorgang an dem Teilnehmerendgerät T gelöscht wird. Diese Zuordnung kann auch dadurch automatisch aufgehoben werden, daß eine mittels einer zuvor zusammen mit dem Einlesevorgang vorgenommene Eingabe einer die Ankunftszeit kennzeichnenden Information dazu benutzt wird, eine Differenz mit einer der aktuellen Zeit entsprechenden Information zu bilden und im Falle der Gleichheit oder einer positiven Differenz ein Löschkriterium zu gewinnen, mittels dessen ein Löschvorgang eingeleitet wird. Beide Löschverfahren haben den Zweck, die genannte Zuordnung rückgängig zu machen, nachdem der betreffende Benutzer das Verkehrsmittel verlassen hat. Eine generelle Löschung ist auch dadurch möglich, daß alle Benutzerrufkennungen KB in allen dem Verkehrsmittel V zugeordneten Speichereinrichtungen automatisch dadurch gelöscht werden, daß, nachdem das Verkehrsmittel V seine Endstation erreicht hat, ein an einer dafür vorgesehenen Bedienstelle vorzunehmender Bedienvorgang durchgeführt wird. Eine vorteilhafte Weiterbildung der Erfindung sieht vor, daß die durch Speicherung der Benutzerrufkennung KB in dem dem Teilnehmerendgerät T zugeordneten Speicherplatz in der Speichereinrichtung SI, gegebenenfalls auch in dem Teilnehmerendgerät T selbst, vorgenommene Zuordnung der Benutzerrufkennung KB zu dem betreffenden Teilnehmerendgerät T dadurch automatisch aufgehoben wird, daß eine mittels einer zuvor zusammen mit dem Einlesevorgang vorgenommene Eingabe einer die Zielstation kennzeichnenden Information dazu benutzt wird, einen Vergleich mit einer der erreichten Zielstation entsprechenden, in das Kommunikationssystem automatisch oder manuell eingegebenen Information durchzuführen und im Falle der Gleichheit beider Informationen ein Löschkriterium zu gewinnen, mittels dessen ein Löschvorgang eingeleitet wird.

Die jeweils eingelesene Benutzerrufkennung KB kann gemäß einer Weiterbildung der Erfindung zusätzlich in dem betreffenden Teilnehmerendgerät T gespeichert und dazu verwendet werden, benutzerbezogene Vermittlungs- und/oder Prüfprozeduren durchzuführen. Die Benutzerrufkennung KB ist in aller Regel ausschließlich einem einzigen Benutzerausweis A zugeordnet. Darüber hinaus ist es gemäß einer Weiterbildung der Erfindung vorteilhaft, die Benutzerrufkennung KB ausschließlich dem Benutzerausweis A zuzuteilen, so daß eine verhältnismäßig einfache Verwaltung dieser Benutzerrufkennung KB ermöglicht ist.

Eine vorteilhafte Weiterbildung der Erfindung sieht vor, daß bestimmte Betriebspersonen für das Verkehrsmittel V oder Personen mit bestimmten Aufgaben dadurch mit Vorrang Zugriff zu dem Kommunikationssystem haben, daß auf den betreffenden Benutzerausweisen A eine Vorrangkennung gespeichert ist, die durch die Ausweislesevorrichtung L lesbar ist und mittels derer eine Vorrangsteuerung in dem Kommunikationssystem aktivierbar ist.

Für den Fall, daß das Verkehrsmittel V aus mehreren Einheiten, beispielsweise mehreren Eisenbahnwaggons, besteht, sind diese Einheiten untereinander zum Anschluß aller Teilnehmerendgeräte an die mobile Endvermittlungseinrichtung EM bzw. den mobilen Konzentrator KM über den in Fig. 4 gezeigten zentralen Datenbus B verbindbar.

Die in Fig. 2 gezeigte Art der Installation der verschiedenen mobilen Einrichtungen des Kommunikationssystems ist besonders zweckmäßig, da zum einen Telefongespräche meistens einen privaten bzw. vertraulichen Charakter haben und sich zum anderen andere Fahrgäste gestört fühlen könnten, wenn ein Teilnehmerendgerät beispielsweise in einem Abteil untergebracht wäre. Es ist jedoch vorteilhaft, in jedem der Abteils eines Waggons oder auch an mehreren Stellen eines möglicherweise vorhandenen Speisewagens sowie bedarfsweise in den Toilette-Räumen der Waggons optische Anzeigemittel AO mit den beigeordneten akustischen Signalgebern S zu installieren.

Das vorgeschlagene Kommunikationssystem hat den Vorteil, daß eine Gebührenkassierung bei Benutzern dieses Systems durch die Verwendung von Benutzerausweisen bargeldlos erfolgen kann. Ein weiterer Vorteil des erfindungsgemäßen Kommunikationssystem ist darin zu sehen, daß jeder Fahrgast, der dies wünscht und der über einen Benutzerausweis verfügt, jederzeit in dem Verkehrsmittel passiv erreichbar ist, sofern er den ihm zur Verfügung stehenden Benutzerausweis in eine der Ausweiselesevorrichtungen gesteckt hat. Es kann also zu einem Teilnehmer in einem Massenverkehrsmittel auch eine ankommende Verbindung aufgebaut werden.

**Patentansprüche**

1. Kommunikationssystem, insbesondere Fernsprechsystem zum Anschluß von mobilen Teilnehmerendgeräten, insbesondere über Funkverbindungen angeschlossenen mobilen Teilnehmerendgeräten, bei dem an zentraler und/oder teilzentraler Stelle Speichereinrichtungen vorgesehen sind, die für alle Benutzer jeweils eine Information über den jeweiligen Standort eines Benutzers gespeichert haben und bei denen die jeweils betreffende gespeicherte Standortinformation dazu verwendet wird, eine zu dem betreffenden mobilen Benutzer hin aufzubauende Verbindung vermittlungsmäßig zu steuern, bei dem eine mobile Endvermittlungseinrichtung (EM) oder ein mobiler Konzentrator (KM) zum Aufbauen und Abbauen von Verbindungen, zum Speichern und Vorverarbeiten von vermittlungstechnischen Daten und zum zusammengefaßten Ausführen von Organisationsfunktionen, wie beispielsweise Ummeldefunktionen, für eine Vielzahl von im wesentlichen gleichberechtigten, in einem aus zumindest einer Einheit bestehenden Verkehrsmittel (V), beispielsweise einem schienengeführten Massenverkehrsmittel, installierten Teilnehmerendgeräten (T) vorgesehen ist, wobei optische Anzeigemittel (AO), denen akustische Signalgeber (S) beigeordnet sind, jeweils bei einem Teilnehmerendgerät (T) und/oder an dem Aufenthaltsort des Benutzers vorgesehen sind, dadurch gekennzeichnet, daß in an sich bekannter Weise jeweils für ein Teilnehmerendgerät (T) eine Ausweiselesevorrichtung (L) vorgesehen ist, mittels derer ein dem individuellen Benutzer zur Verfügung stehender Benutzerausweis (A), der zumindest eine eine Benutzerrufkennung (KB) betreffende Information enthält, lesbar ist, daß dem Teilnehmerendgerät (T) die dem jeweiligen Benutzerausweis (A) zugeteilte Benutzerrufkennung (KB) zugeordnet wird, wobei eine Vielzahl von Benutzerausweisen (A) eingelesen werden kann und wobei dem Teilnehmerendgerät (T) außerdem eine individuelle Teilnehmerendgerät-Rufkennung (KT) fest zugeordnet sein kann, daß die eingelesene Benutzerrufkennung (KB) zu einer dem betreffenden Teilnehmerendgerät (T) individuell zugeordneten Endgerät-Speichereinheit (TSP) übertragen und dort gespeichert wird und daß entweder die eingelesene Benutzerrufkennung (KB) zusammen mit einer dem Standort der benutzten Ausweiselesevorrichtung (L) zugeordneten Standortkennung (KS) der zentralen oder teilzentralen, landfesten Speichereinrichtung (SI) und/oder der dem Verkehrsmittel (V) zugeordneten mobilen Endvermittlungseinrichtung (EM) bzw. dem mobilen Konzentrator (KM) übertragen und dort jeweils gespeichert wird oder die Standortkennung (KS) durch Identifikation der betreffenden Nachrichtenquelle ermittelt und zusammen mit der Benutzerrufkennung (KB) in der zentralen oder teilzentralen, landfesten Speichereinrichtung (SI) und/oder der dem Verkehrsmittel (V) zugeordneten mobilen Endvermittlungseinrichtung (EM) bzw. dem mobilen Konzentrator (KM) gespeichert wird.

2. Kommunikationssystem nach Anspruch 1, dadurch gekennzeichnet, daß die Standortkennung (KS) in den betreffenden Speicherplätzen durch eine neue Standortkennung (KS') dadurch automatisch überschrieben werden kann, daß der Informationsinhalt des Benutzerausweises (A) in eine andere Ausweiselesevorrichtung (L) eingelesen wird und daß die zentrale oder teilzentrale, landfeste Speichereinrichtung (SI) und/oder die dem Verkehrsmittel (V) zugeordnete mobile Endvermittlungseinrichtung (EM) bzw. dem mobilen Konzentrator (KM) einen Löschbefehl an die mobile Endvermittlungseinrichtung (EM) bzw. den mobilen Konzentrator (KM) und/oder an die Endgerät-Speichereinheit (TSP) sendet, womit die Standortkennung (KS) zusammen mit der Benutzerrufkennung (KB) bzw. nur die Benutzerrufkennung (KB) gelöscht wird.

3. Kommunikationssystem nach Anspruch 1, dadurch gekennzeichnet, daß die durch Speicherung der Benutzerrufkennung (KB) in dem dem Teilnehmerendgerät (T) zugeordneten Speicherplatz in der Speichereinrichtung (SI), gegebenenfalls auch in dem Teilnehmerendgerät (T) selbst, vorgenommene Zuordnung der Benutzerrufkennung (KB) zu dem betreffenden Teilnehmerendgerät (T) dadurch aufgehoben wird, daß der betreffende Speicherinhalt durch einen Bedienvorgang an dem Teilnehmerendgerät (T) gelöscht wird.

4. Kommunikationssystem nach Anspruch 1, dadurch gekennzeichnet, daß die durch Speicherung der Benutzerrufkennung (KB) in dem dem Teilnehmerendgerät (T) zugeordneten Speicherplatz in der Speichereinrichtung (SI), gegebenenfalls auch in dem Teilnehmerendgerät (T) selbst, vorgenommene Zuordnung der Benutzerrufkennung (KB) zu dem betreffenden Teilnehmerendgerät (T) dadurch automatisch aufgehoben wird, daß eine mittels einer zuvor zusammen mit dem Einlesevorgang vorgenommene Eingabe einer die Ankunftszeit kennzeichnenden Information dazu benutzt wird, eine Differenz mit einer der aktuellen Zeit entsprechenden Information zu bilden und im Falle der Gleichheit oder einer positiven Differenz ein Löschkriterium zu gewinnen, mittels dessen ein Löschvorgang eingeleitet wird.

5. Kommunikationssystem nach Anspruch 1, dadurch gekennzeichnet, daß alle Benutzerrufkennungen (KB) in allen dem Verkehrsmittel (V) zugeordneten Speichereinrichtungen automatisch dadurch gelöscht werden, daß, nachdem das Verkehrsmittel (V) seine Endstation erreicht hat, ein an einer dafür vorgehenden Bedienstelle vorzunehmender Bedienvorgang durchgeführt wird.

6. Kommunikationssystem nach Anspruch 1, dadurch gekennzeichnet, daß die durch Speicherung der Benutzerrufkennung (KB) in dem dem Teilnehmerendgerät (T) zugeordneten Speicherplatz in der Speichereinrichtung (SI), gegebenenfalls auch in dem Teilnehmerendgerät (T) selbst, vorgenommene Zuordnung der Benutzerrufkennung (KB) zu dem betreffenden Teilnehmerendgerät (T) dadurch automatisch aufgehoben wird, daß eine mittels einer zuvor zusammen mit dem Einlesevorgang vorgenommene Eingabe einer die Zielstation kennzeichnenden Information dazu benutzt wird, einen Vergleich mit einer der erreichten Zielstation entsprechenden, in das Kommunikationssystem automatisch oder manuell eingegebenen Information durchzuführen und im Falle der Gleichheit beider Informationen ein Löschkriterium zu gewinnen, mittels dessen ein Löschvorgang eingeleitet wird.

7. Kommunikationssystem nach Anspruch 2, dadurch gekennzeichnet, daß die jeweils eingelesene Benutzerrufkennung (KB) zusätzlich in dem betreffenden Teilnehmerendgerät (T) gespeichert und dazu verwendet wird, benutzerbezogene Vermittlungs- und/oder Prüfprozeduren durchzuführen.

8. Kommunikationssystem nach Anspruch 1, dadurch gekennzeichnet, daß die Benutzerrufkennung (KB) ausschließlich einem einzigen Benutzerausweis (A) zugeordnet ist.

9. Kommunikationssystem nach Anspruch 1, dadurch gekennzeichnet, daß die Benutzerrufkennung (KB) nur dem Benutzerausweis (A) zugeteilt ist.

10. Kommunikationssystem nach einem der vorhergehenden Ansprüche, dadurch gekennzeichnet, daß bestimmte Betriebspersonen für das Verkehrsmittel (V) oder Personen mit bestimmten Aufgaben dadurch mit Vorrang Zugriff zu dem Kommunikationssystem haben, daß auf den betreffenden Benutzerausweisen (A) eine Vorrangkennung gespeichert ist, die durch die Ausweislesevorrichtung (L) lesbar ist und mittels derer eine Vorrangsteuerung in dem Kommunikationssystem aktivierbar ist.

11. Kommunikationssystem nach Anspruch 1, dadurch gekennzeichnet, daß für den Fall, daß das Verkehrsmittel (V) aus mehreren Einheiten, beispielsweise mehreren Eisenbahnwaggons, besteht, diese Einheiten untereinander zum Anschluß aller Teilnehmerendgeräte an die mobile Endvermittlungseinrichtung (EM) bzw. den mobilen Konzentrator (KM) über einen zentralen Datenbus (B) verbunden sind.

## Claims

1. A communications system, in particular a telephone system, for connecting mobile subscriber terminals, in particular mobile subscriber terminals connected via radio links, wherein at central and/or sub-central positions there are provided storage arrangements which, for all users, hold in stored form an item of information relating to the respective location of a user, and wherein the respectively relevant item of stored location information is used to control the switching of a connection which is to be established to the mobile user in question, wherein a mobile terminal switching arrangement (EM) or a mobile concentrator (AM) is provided for the establishment and disestablishment of connections, for the storage and preliminary processing of items of switching technology data, and for the combined execution of organisation functions, such as for example call transfer functions, for a plurality of the subscriber terminals (T) which fundamentally enjoy equal priority, and which are installed in a transportation means (VZB) comprising at least one unit, for example a rail-base mass transportation means, where optical display means (AO) which are allocated acoustic signal generators (S), are provided at each subscriber terminal (T) and/or at the location of the user, characterised in that in a manner known per se each subscriber terminal (T) is provided with an identification read-out device (L) which enables the read-out of a user identification (A) which is available to each individual user and which includes at least one item of information relating to a user call code (KB), that the subscriber terminal (T) is assigned the user call code (KB) allocated to the user identification (A) in question, where a plurality of user identifications (A) can be input and where the subscriber terminal (T) can also be permanently assigned an individual subscriber terminal call code (KT), that the input user call code (KB) is transmitted to a terminal storage unit (TSP) individually assigned to the subscriber terminal (T) in question, and is stored therein, and that either the input user call code (KB) together with a location code (KS) allocated to the location of the identification read-out device (L) which is being used is transmitted to the central or sub-central land-based storage arrangement (SI) and/or to the mobile terminal switching arrangement (EM) or mobile concentrator (KM) allocated to the transportation means (V) and is stored therein, or else the location code (KS) is determined through the identification of the information source in question and, together with the user call code (KB), is stored in the central or sub-central land-based storage arrangement (SI) and/or in the mobile terminal switching arrangement (EM) or mobile concentrator (KM) assigned to the transportation means (V).

2. Communications system as claimed in claim 1, characterised in that the location code (KS) can be automatically over-written in the relevant storage positions by means of a new location code (KS), in that the information content of the user identification (A) is input into a different identification read-out device (L) and that the central or sub-central, land-based storage arrangement (SI) and/or the mobile terminal switching arrangement (EM) or mobile concentrator (KM) assigned to the transportation means (V) transmits an erase command to the mobile terminal switching arrangement (EM) or mobile concentrator (KM) and/or to the terminal storage unit (TSP) by which means an erasure is effected either of the location code (KS) together with the user call code (KB) or of the user call code (KB) alone.

3. Communications system as claimed in claim 1, characterised in that the allocation of the user call code (KB) to the subscriber terminal (T) in question, which allocation is effected by storing the user call code (KB) in that storage position within the storage arrangement (SI) which is assigned to the subscriber terminal (T), and possibly also in the subscriber terminal (T) itself, is discontinued in that the storage content in question is erased by means of a control procedure at the subscriber terminal (T).

4. Communications system as claimed in claim 1, characterised in that the allocation of the user call code to the subscriber terminal (T) in question, which allocation is effected by storing the user call code (KB) in that storage position within the storage arrangement (SI) which is assigned to the subscriber terminal (T), and possibly also in the subscriber terminal (T) itself, is automatically discontinued, in that an input, previously undertaken together with the read-in operation of an item of information characterising the arrival time is used in order to form a difference with an item of information corresponding to the current time and in the event of identity or a positive difference an erase criterion is formed by means of which an erase procedure is initiated.

5. Communications system as claimed in claim 1, characterised in that all the user call codes (KB) in all the storage arrangements assigned to the transportation means (V) are automatically erased in that after the transportation means (V) has reached its end station, a control procedure, to be performed at a control station provided for that purpose is carried out.

6. Communications system as claimed in claim 1, characterised in that the allocation of the user call code (KB) to the relevant subscriber terminal (T), which allocation is effected by storing the user call code (KB) in that storage position within the storage arrangement (SI) which is assigned to subscriber terminal (T), possibly also in the subscriber terminal (T) itself, is automatically discontinued, in that an input, previously undertaken together with the read-in operation, of an item of information characterising the target station is used to carry out a comparison with an item of information which corresponds to the target station which has been reached and which is automatically or manuelly input into the communications system, and in the event of the identity of the two items of information an erase criterion is obtained by means of which an erase procedure is initiated.

7. Communications system as claimed in claim 2, characterised in that each input user call code (KB) is additionally stored in the relevant subscriber terminal (T) and is used to carry out user-related switching- and/or test procedures.

8. Communications system as claimed in claim 1, characterised in that the user call code (KB) is exclusively assigned to one single user identification (A).

9. Communications system as claimed in claim 1, characterised in that the user call code (KB) is assigned only to the user identification (A).

10. Communications system as claimed in one of the preceding claims, characterised in that certain operating personel of the transportation means (V) or individuals responsible for certain functions have priority access to the communifications system in that on the user identifications (A) in question there is stored a priority code which can be read out by the identification read-out device (L) and by means of which a priority control unit within the communications system can be activated.

11. Communications system as claimed in claim 1, characterised in that in the event that the transportation means (V) comprises a plurality of units, for example a plurality of railway wagons, these units are connected one to another in order to connect all the subscriber terminals, the mobile terminal switching arrangement (EM) or the mobile concentrator (KM) via a central data bus (B).

**Revendications**

1. Système de communications, notamment système téléphonique, pour le raccordement de terminaux mobiles d'abonnés, notamment des terminaux mobiles d'abonnés raccordés par l'intermédiaire de liaisons hertziennes, dans lequel il est prévu, au niveau d'un poste central ou semi-central, des dispositifs de mémorisation qui ont respectivement mémorisé, pour tous les usagers, une information sur la position respective d'un usager et dans lesquels, l'information de position mémorisée respectivement concernée est utilisée pour commander, du point de vue de la commutation, une liaison devant être établie en direction de l'usager mobile concerné, dans lequel ist est prévu un dispositif de commutation terminal mobile (EM) ou un concentrateur mobile (KM) pour l'établissement et la suppression de liaisons, pour la mémorisation et le prétraitement de données relatives à la technique de commutation et pour l'exécution groupée de fonctions d'organisation, comme par exemple des fonctions de transfert d'appel, pour un grand nombre de terminaux d'abonnés (T), ayant sensiblement les mêmes droits, qui sont installés dans un moyen de transport (V) constitué par au moins une unité, par exemple un moyen de transport public circulant sur rails, cependant que des moyens d'affichage optique (AO), auxquels sont associés des générateurs de signaux acoustiques (S), sont respectivement prévus pour un terminal d'abonné (T) et/ou à l'endroit où se trouve l'usager, caractérisé par le fait que de façon connue en soi, il est respectivement prévu pour un terminal d'abonné (T) un dispositif de lecture d'identité (L) au moyen duquel peut être lu un document d'identité (A) d'usager, à la disposition de l'usager individuel, qui contient au moins une information concernant une identification d'appel (KB) d'usager, qu'au terminal d'abonné (T) est associée l'identification d'appel (KB) d'usager attribuée au document d'identité (A) d'usager respectif, cependant qu'un grand nombre de documents d'identité (A) d'usager peut être lu et cependant qu'en outre une identification d'appel individuelle (KT) de terminal d'abonné peut être associée de façon fixe au terminal d'abonné, que l'identification d'appel (KB) d'usager qui est lue est transmise à une unité de mémorisation (TSP) de terminal associée individuellement au terminal d'abonné (T) concerné et y est mémorisée, et que soit l'identification d'appel (KB) d'usager qui est mémorisée est transmise, conjointement avec une identification de position (KS) associée à la position du dispositif de lecture d'identité (L) utilisé, au dispositif de mémorisation central ou semi-central (SI) se trouvant à un emplacement fixe et/ou au dispositif de commutation terminal mobile (EM) associé au moyen de transport (V) ou respectivement au concentrateur mobile (KM) et y est respectivement mémorisée, soit l'identification de position (KS) est déterminée par identification de la source d'informations concernée et est mémorisée, conjointement avec l'identification d'appel (KB) d'usager, dans le dispositif de mémorisation central ou semi-central (SI) se trouvant à un emplacement fixe et/ou le dispositif de commutation terminal mobile (EM) associé au moyen de transport (V) ou respectivement le concentrateur mobile (KM).

2. Système de communications suivant la revendication 1, caractérisé par le fait que l'identification (KS) de position peut être remplacée automatiquement par une nouvelle identification (KS') de position dans les emplacements de mémoire concernés grâce au fait que le contenu d'information du document d'identité (SA) d'usager est lu dans un autre dispositif de lecture d'identité (L), et que le dispositif de mémorisation central ou semi-central (SI), se trouve à un emplacement fixe et/ou le dispositif de commutation de terminal mobile (EM) associé au moyen de transport (V) ou respectivement le concentrateur mobile (KM) envoie un ordre d'effacement au dispositif de commutation terminal mobile (EM) ou respectivement au concentrateur mobile (KM) et/ou à l'unité de mémorisation (TSP) de terminal, grâce à quoi l'identification (KS) de position est effacée conjointement avec l'identification d'appel (KB) d'usager où seule l'identification d'appel (KB) d'usager est effacée.

3. Système de communications suivant la revendication 1, caractérisé par le fait que l'association de l'identification d'appel (KB) d'usager au terminal d'abonné concerné (T) qui est effectuée par mémorisation des identifications d'appel (KB) d'usager dans l'emplacement de mémoire associé au terminal d'abonné (T) dans le dispositif de mémorisation (SI), éventuellement également dans le terminel d'abonné (T) lui-même, peut être supprimée grâce au fait que le contenu mémorisé concerné est effacé par une procédure de service au niveau du terminal d'abonné (T).

4. Système de communications suivant la revendication 1, caractérisé par le fait que l'association de l'identification d'appel (KB) d'usager au terminal d'abonné concerné (T), qui est effectuée, par mémorisation de l'identification d'appel (KB) d'usager dans l'emplacement de mémoire associé au terminal d'abonné (T) dans le dispositif de mémorisation (SI), éventuellement également dans le terminal d'abonné (T) lui-même, est supprimée automatiquement grâce au fait qu'une information qui caractérisé l'instant d'arrivée, et est introduite préalablement conjointement à ce precessus de lecture, est utilisée pour former une différence avec une information qui correspond à l'instant réel et pour obtenir, dans le cas de l'égalité ou d'une différence positive, un critère d'effacement au moyen duquel est introduit un processus d'effacement.

5. Système de communications suivant la revendication 1, caractérisé par le fait que toutes les identifications d'appel (KB) d'usagers sont effacées automatiquement dans tous les dispositifs de mémorisation associés au moyen de transport (V), grâce au fait que, une fois que le moyen de transport (V) a atteint sa destination finale, il est mis en œuvre une prodédure de service qui doit être effectuée au niveau d'un poste de service prévu à cet effet.

6. Système de communications suivant la revendication 1, caractérisé par le fait que l'association de l'identification d'appel (KB) d'usager au terminal d'abonné concerné (T), qui est effectuée par mémorisation de l'identification d'appel (KB) d'usager dans l'emplacement de mémoire associé au terminal d'abonné (T) dans le dispositif de mémorisation (SI), éventuellement également dans le terminal d'abonné (T) lui-même, est supprimée automatiquement grâce au fait qu'une information qui caractérise la destination, et qui est introduite préalablement conjointement avec le processus de lecture, est utilisée pour réaliser une comparaison avec une information qui correspond à la destination atteinte et qui est introduite automatiquement ou manuellement dans le système de communication, et pour obtenir, dans le cas où les deux informations sont identiques, un critère d'effacement au moyen, duquel est introduit un processus d'effacement.

7. Système de communications suivant la revendication 2, caractérisé par le fait que l'identification d'appel (KB) d'usager respectivement lue est mémorisée en plus dans le terminal d'abonné concerné (T) et est utilisée pour réaliser des procédures de commutation et/ou de contrôle se rapportant à l'usager.

8. Système de communications suivant la revendication 1, caractérisé par le fait que l'identification d'appel (KB) d'usager est associée exclusivement à un seul document d'identité (A) d'usager.

9. Système de communications suivant la revendication 1, caractérisé par le fait que l'identification d'appel (KB) d'usager est attribuée uniquement au document d'identité (A) d'usager.

10. Système de communications suivant l'une des revendications précédentes, caractérisé par le fait que des personnes de service déterminées pour le moyen de transport (V) ou des personnes ayant des fonctions déterminées ont accès en priorité au système de communication, que sont les documents d'identité (A) d'usagers concernés il est mémorisé une identification de priorité qui peut être lue par le dispositif de lecture d'identité (L) et au moyen de laquelle un dispositif de commande de priorité peut être activé dans le système de communication.

11. Système de communications suivant la revendication 1, caractérisé par le fait que dans le cas où le moyen de transport (V) est constitué par plusieurs unités, par exemple plusieurs wagons de chemins de fer, ces unités sont reliées les unes aux autres, par l'intermédiaire d'un conducteur omnibus central (B) de données, pour le raccordement de tous les terminaux d'abonnés au dispositif de commutation terminal mobile (EM) ou au concentrateur mobile (KM).

# F I G 1

V(EM/KM,T,L,AO,S,B)

(SI)

# FIG 2

T/L/TSP

AO/S

B

EM/KM
(KS)

FIG 3

T (KT)

TSP

A (KB)

L

FIG 4

SI

V

EM/KM

T

T

B

AO    S

AO    S